# EUROPEAN PATENT APPLICATION

(11) **EP 4 807 580 A1**
(43) Date of publication of application: **16.09.2026**
(21) Application number: 24888052.8
(22) Date of filing: 07.11.2024
(51) Int. Cl.: G06F 16/27

(54) **DISTRIBUTED DATABASE ARCHITECTURE SYSTEM, METADATA NODE, AND METHOD THEREOF**

(30) Priority: 09.11.2023 CN 202311489457
(71) Applicant: Protonbase HK Limited, Wan Chai Hong Kong (HK)
(72) Inventor: WANG, Senlin, Hong Kong (CN); HUANG, Dongping, Hong Kong (CN); DENG, Xiaoyong, Hong Kong (CN); WU, Dongzheng, Hong Kong (CN); ZHOU, Qilin, Hong Kong (CN)
(74) Representative: Viering, Jentschura & Partner mbB Patent- und Rechtsanwälte
(86) International application number: PCT/CN2024/130520
(87) International publication number: WO 2025/098441

(57) **Abstract**

The present application provides a distributed database architecture system, a metadata node, and a method thereof. The system can be used in a cloud service and comprises a plurality of computing nodes, a plurality of storage nodes and a metadata node. The metadata node records a correspondence between each data block among data blocks obtained by dividing each data stream and a storage location for storing the data block, wherein the storage locations for the data blocks of each data stream are located in one or more storage nodes; the metadata node records two or more references for a first data stream to be read by two or more computing nodes, wherein each reference is used by each of the two or more computing nodes to acquire the correspondences of the first data stream to read the first data stream. The plurality of computing nodes read each data stream from the plurality of storage nodes or store each data stream to the plurality of storage nodes on the basis of the correspondences. The plurality of storage nodes store one or more data blocks of each data stream in a corresponding storage location, respectively.

## Description

### TECHNICAL FIELD

The present disclosure relates to the field of distributed databases, and more particularly, to a distributed database architecture system, a metadata node for a distributed database architecture system, a method for a distributed database architecture system, and a method for a metadata node for a distributed database architecture system.

### BACKGROUND

With the booming development of the Internet and the growth of data volume and user volume, data analysis and processing become increasingly important. In many scenarios, the existing distributed database architecture cannot achieve low-latency, high-efficiency access and fast upgrade, and there is still a need of improvement.

### SUMMARY

In view of the above, the present disclosure provides a distributed database architecture system that enables flexible deployment of compute nodes and storage nodes and rapid upgrades of database systems while satisfying low-latency data access.

According to an aspect of the present disclosure, a distributed database architecture system is provided, comprising a plurality of compute nodes, a plurality of storage nodes, and a metadata node, wherein the metadata node is configured to: record a correspondence between each data block of one or more data blocks into which each data stream is divided and a storage location for storing the each data block, the storage location(s) for the one or more data blocks for each data stream being located in one or more of the plurality of storage nodes, and record two or more references to a first data stream to be read by two or more compute nodes, each reference being used by one of the two or more compute nodes to obtain the correspondence for the first data stream, so as to read the first data stream; and the plurality of compute nodes are configured to: read each data stream from the plurality of storage nodes or store the each data stream to the plurality of storage nodes in accordance with the correspondence for the each data stream; and the plurality of storage nodes are configured to: store the one or more data blocks of each data stream into storage locations for the one or more data blocks, respectively.

Optionally, the metadata node is further configured to: generate a reference to the first data stream for a first compute node of the two or more compute nodes in response to the first compute node needing to read the first data stream; delete the reference to the first data stream for the first compute node in response to the first compute node ceasing to need to read the first data stream; and instruct the plurality of storage nodes to delete the first data stream in response to all references to the first data stream being deleted.

Optionally, the metadata node is further configured to: assign one or more first storage locations located in one or more first storage nodes of the plurality of storage nodes for one or more first data blocks into which the first data stream is divided, in response to a storage request by a second compute node of the plurality of compute nodes requesting to store the first data stream, return information about the one or more first storage locations for storing the one or more first data blocks to the second compute node, and record a correspondence between each first data block of the one or more first data blocks and the first storage location for storing the each first data block; and the second compute node is configured to: divide the first data stream into the one or more first data blocks, and send a corresponding first data block of the one or more first data blocks to the first storage node corresponding to each first storage location according to the information about the one or more first storage locations; and the first storage node is configured to: store the first data blocks received from the second compute node into corresponding first storage locations.

Optionally, the metadata node is further configured to record information of a newly added storage node, and in response to a request by a third compute node of the plurality of compute nodes requesting to store a data stream, allocate storage locations including a storage location located in the newly added storage node to the third compute node.

Optionally, the distributed database architecture system further includes a control node, the control node is configured to send information of the newly added storage node to the metadata node according to the newly added storage node.

Optionally, the distributed database architecture system further includes a control node, wherein the control node is configured to: schedule a second data stream processed by a fourth compute node of the plurality of compute nodes to be processed by a fifth compute node of the plurality of compute nodes according to a load distribution of the plurality of compute nodes, and control the metadata node to establish a reference to the second data stream for the fifth compute node during the scheduling and to delete a reference to the second data stream for the fourth compute node upon completion of the scheduling.

Optionally, the distributed database architecture system further comprises a control node, wherein the control node is configured to control the metadata node to copy references to data streams of a first set of data streams for each compute node of a first compute node group for processing the first set of data streams to create references to data streams of the first set of data streams for each compute node of a new or present third compute node group.

Optionally, the control node is further configured to control the first set of data streams to be taken offline from the first compute node group; and the metadata node is further configured to delete a reference to a data stream of the first set of data streams for each compute node of the first compute node group.

Optionally, the control node is further configured to control each compute node in the first compute node group to synchronize data in a memory into a memory of a compute node of a second compute node group.

Optionally, the control node is further configured to control the first compute node group to stop writing data into its memory when an amount difference between the data in the memory of the first compute node group and the data in the memory of the second compute node group is less than a first predetermined threshold or a synchronization latency between the first compute node group and the second compute node group is below a second predetermined threshold, control the second compute node group to come online and control the first compute node group to go offline after the synchronization is completed, and control the metadata node to delete a reference to a data stream of the first set of data streams for each compute node of the first compute node group after the synchronization is completed.

Optionally, the metadata node is further configured to store multiple copies for each reference.

Optionally, the plurality of compute nodes are deployed in one or more cloud services; and/or the plurality of storage nodes are deployed in one or more cloud services.

According to another aspect of the present disclosure, there is provided a metadata node for a distributed database architecture system comprising a plurality of compute nodes, a plurality of storage nodes, and a metadata node, wherein the metadata node is configured to: record a correspondence between each data block of one or more data blocks into which each data stream is divided and a storage location for storing the each data block, the storage location(s) for the one or more data blocks for each data stream being located in one or more of the plurality of storage nodes; and record two or more references to a first data stream to be read by two or more compute nodes, each reference being used by one of the two or more compute nodes to obtain the correspondence for the first data stream, so as to read the first data stream.

According to another aspect of the present disclosure, there is provided a method for a distributed database architecture system comprising a plurality of compute nodes, a plurality of storage nodes, and a metadata node, wherein the method comprises: by the metadata node: recording a correspondence between each data block of one or more data blocks into which each data stream is divided and a storage location for storing the each data block, the storage location(s) for the one or more data blocks for each data stream being located in one or more of the plurality of storage nodes, and recording two or more references to a first data stream to be read by two or more compute nodes, each reference being used by one of the two or more compute nodes to obtain the correspondence for the first data stream, so as to read the first data stream; by the plurality of compute nodes: reading each data stream from the plurality of storage nodes or store the each data stream to the plurality of storage nodes in accordance with the correspondence for the each data stream; and, by the plurality of storage nodes: storing the one or more data blocks of each data stream into storage locations for the one or more data blocks, respectively.

According to another aspect of the present disclosure, there is provided a method for a metadata node of a distributed database architecture system, the distributed database architecture system comprising a plurality of compute nodes, a plurality of storage nodes, and a metadata node, wherein the method comprises: recording a correspondence between each data block of one or more data blocks into which each data stream is divided and a storage location for storing the each data block, the storage location(s) for the one or more data blocks for each data stream being located in one or more of the plurality of storage nodes; and recording two or more references to a first data stream to be read by two or more compute nodes, each reference being used by one of the two or more compute nodes to obtain the correspondence for the first data stream, so as to read the first data stream.

According to embodiments of the present disclosure, storage locations that can be located in different storage nodes are allocated to the data blocks of each data stream through the metadata node, achieving unbinding and flexible scheduling of compute nodes and storage nodes, and recording the correspondence between each data block of each data stream and the storage location where the data block is stored through the metadata node, so that the stored data streams can be read quickly. In addition, by creating multiple references to a single data stream for different compute nodes, different compute nodes can access the same data stream independently, thereby enabling flexible provisioning and rapid upgrading of the database, and enabling managing the life cycle of data streams by using multiple references.

### BRIEF DESCRIPTION OF DRAWINGS

In order to more clearly illustrate the embodiments of the present disclosure or the technical solutions in the prior art, the drawings that need to be used in the description of the embodiments or the prior art will be briefly introduced below. Obviously, the drawings in the following description are only These are some embodiments of the present disclosure. For those of ordinary skill in the art, other drawings can be obtained based on these drawings without exerting creative efforts.
Fig. 1 shows an existing distributed database architecture.
Fig. 2 shows a schematic structural diagram of a distributed database architecture system according to an embodiment of the present disclosure.
Fig. 3 shows a schematic diagram of storing a data stream by a storage node in a data block manner into storage locations of respective data blocks according to an embodiment of the present disclosure.
Fig. 4 shows a schematic diagram of a relationship between compute nodes, a metadata node and storage nodes according to an embodiment of the present disclosure.
Fig. 5 shows a schematic diagram of a process of writing a data stream according to an embodiment of the present disclosure.
Fig. 6 shows a schematic diagram of how to quickly read and write after newly adding a storage node according to an embodiment of the present disclosure.
Fig. 7 shows a schematic diagram of a database fast zero-copy multiple copies architecture according to an embodiment of the present disclosure.
Fig. 8 shows a schematic diagram of a process of smooth upgrade based on fast database cloning according to an embodiment of the present disclosure.
Fig. 9 shows a flowchart of a method for a distributed database architecture system according to an embodiment of the present disclosure.
Fig. 10 shows a flowchart of a method for a metadata node of a distributed database architecture system according to an embodiment of the present disclosure.

### DETAILED DESCRIPTION

Reference will now be made in detail to specific embodiments of the present disclosure, examples of which are illustrated in the accompanying drawings. While the disclosure will be described in conjunction with the specific embodiments, it will be understood that it is not intended to limit the disclosure to the described embodiments. On the contrary, it is intended to cover alternatives, modifications, and equivalents included within the spirit and scope of the disclosure as defined by the appended claims. It should be noted that the method steps described herein may be implemented by any functional block or functional arrangement, and any functional block or functional arrangement may be implemented as a physical entity or a logical entity, or a combination of both.

The current distributed database architecture binds compute nodes and storage nodes, which cannot realize flexible deployment of the compute nodes and the storage nodes and the rapid upgrade of database system. For example, when changing or expanding compute nodes or storage nodes, a large amount of data needs to be moved, which takes a long time. For example, a typical database stores data in a key-value manner, where a key is associated with a value as a unique identifier, and when queried, the data is found by finding the storage location of the data by the key. However, when this kind of database encounters an augmented storage node, it cannot immediately provide write services to the storage node because keys need to be assigned to the data.

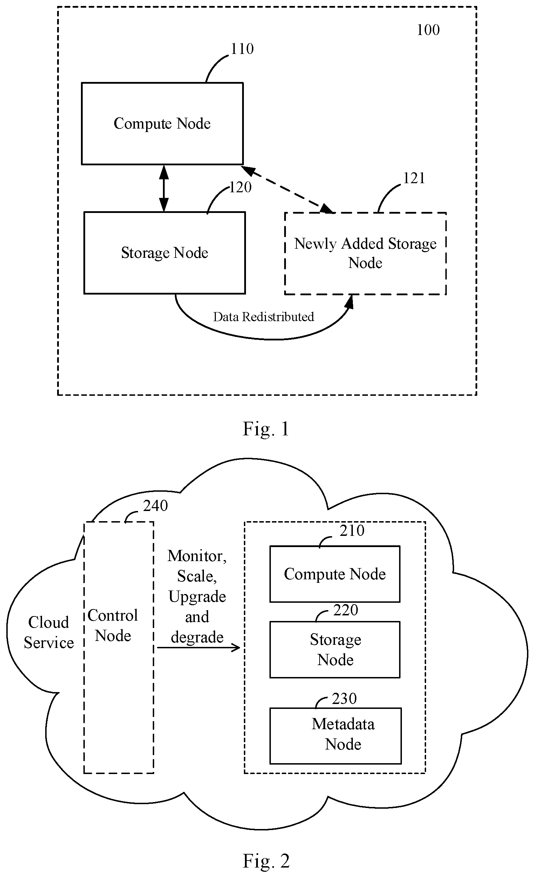

Fig. 1 shows an existing distributed database architecture system 100. As shown in Fig. 1, the distributed database architecture system 100 includes compute nodes 110 and storage nodes 120. Each storage node 120 corresponds to a compute node 110, and the compute node 110 controls reading and writing of data from and into the storage node 120. When a storage node 121 is newly added to the compute node 110, or the storage node 120 bound to the compute node 110 is changed into a storage node 121, the data writing service cannot be performed immediately in the storage node 121, and it is necessary to wait for a part of the data of the database to be transferred from the existing storage node 121. Only after the storage node 120 moves to the storage node 121, the data writing service can be provided in the storage node 121, so it takes a long time. In addition, existing distributed database architectures for object storage cannot achieve low-latency access.

In view of the above, the present disclosure proposes a new distributed database architecture system that can realize flexible deployment of compute nodes and storage nodes and rapid upgrades of database systems while satisfying low-latency data access. The distributed database architecture system of the present disclosure is suitable for scenarios where large amounts of data need to be processed and low-latency access is needed, and provides high-performance, high-availability and flexible database services to users. The distributed database architecture system of the present disclosure can be implemented based on standard cloud service products provided by one or more cloud service providers.

Fig. 2 shows a schematic structural diagram of a distributed database architecture system 200 according to an embodiment of the present disclosure.

The distributed database architecture system 200 may include a plurality of compute nodes 210, a plurality of storage nodes 220, and a metadata node 230. By way of illustration, only one compute node and one storage node are shown in Fig. 2. Optionally, the distributed database architecture system 200 may also include a control node 240. The control node 240 can be used to request cloud service resources from a cloud service provider to construct the compute node 210, the storage node 220 and the metadata node 230, and can perform a series of controls, such as monitoring loads, scaling capacities of nodes, upgrading and downgrading databases, etc.

As shown in Fig. 2, the compute node 210, the storage node 220, and the metadata node 230 may be deployed in a cloud service resource provided by a cloud service provider. For example, the compute nodes 210 may be computing resources allocated on a cloud service, which may be provided by any hardware with processing capabilities, such as a central processing unit (CPU). The storage node 220 may be a persistent storage resource allocated on a cloud service, which may be provided by any hardware with persistent storage capabilities, such as magnetic hard drives and/or solid state drives (SSDs). The metadata node 230 may be a resource on a cloud service that provides metadata storage and processing, for example, it may be provided by hardware with processing and storage capabilities. The metadata node 230 may also be implemented by a compute node and a storage node. The control node 240 can be any computing resource (e.g., a computing resource allocated on a cloud service), which can be provided by any hardware with processing capabilities, such as a central processing unit (CPU). The control node 240 may also be implemented on a compute node. The above-mentioned hardware that provides resources can cooperate with corresponding software to provide services. According to embodiments of the present disclosure, a plurality of compute nodes may be deployed in one or more cloud services. A plurality of storage nodes can also be deployed in one or more cloud services.

The metadata node 230 may be configured to record a correspondence between each of the one or more data blocks into which each data stream is divided and the storage location used to store each data block. Storage locations for one or more data blocks of each data stream are located in one or more of the plurality of storage nodes.

In embodiments of the present disclosure, a data stream refers to a data string in which data is streamed for transmission or storage. The data stream can be any form of stream, such as a character stream, a byte stream, a bit stream, etc. For example, in accessing a database, the data in the database can typically be converted into a data stream, such as a byte stream. A data stream can represent the data stream corresponding to the data streamed and stored at one time. For example, a data stream may correspond to a data stream to which a record in a database (e.g., a data table) corresponds. In embodiments of the present disclosure, a database may be a collection of data streams.

The data stream may be divided into one or more data blocks for dispersedly stored in one or more storage locations in one or more storage nodes in units of data blocks. Typically, a data block is a segment of a data stream, and a data stream has multiple data blocks. In embodiments of the present disclosure, the number of data blocks of the data stream can be arbitrary without an upper limit. In the case where the data stream is relatively small, a data stream can also be divided into only one data block. The size of the data block can be determined according to specific application scenarios. The metadata node, the compute nodes, and the storage nodes all process according to the determined data block size. Each data block can be stored into a storage location. In embodiments of the present disclosure, different data blocks may be stored into storage locations of the same or different storage nodes. In the case where a data stream is divided into multiple data blocks, different data blocks of a data stream can be stored in storage locations of the same or different data nodes. Therefore, in embodiments of the present disclosure, one data stream can be stored in different storage nodes, achieving dispersion and flexible storage of data streams. Moreover, the compute node processing the data stream can access multiple storage nodes, and the same storage node can be accessed by multiple compute nodes, eliminating the binding relationship between compute nodes and storage nodes. In addition, the data stream is streamed data. Therefore, the access to the data stream and the data blocks divided from the data stream does not rely on key-value relationships. Therefore, when the data blocks of the data stream need to be stored in a new storage node, it can be stored directly without firstly copying part of the data of other data nodes to the new data node or creating key-value relationships in the new data node, thus enabling rapid expansion of storage nodes.

To facilitate fast reading of the stored data streams, the metadata node 230 may record, as one of the metadata, a correspondence between each of the one or more data blocks into which each data stream is divided and the storage location used to store each data block. In other words, the metadata node 230 correspondingly records the storage location where the database is stored for each data block in data block units, that is, the metadata according to the embodiment of the present disclosure is data block-level metadata. For example, the correspondence may be a mapping between an identification of a data block in the data stream and an identification of a storage location of the data block. Storage locations according to embodiments of the present disclosure may have different granularities, such as storage node granularity, storage device granularity in a storage node, or granularity of more specific storage locations in a storage device. In the case of storage node granularity, the metadata node only allocates and records the storage node that stores a certain data block, and which storage device specifically stores it to the storage node and which specific location in the storage device can be determined by the storage node. In this case, the identification of the storage location may only include the identification of the storage node. When the storage device granularity in the storage node is used, the metadata node allocates and records the storage node that stores a certain data block and the storage device in the storage node that stores the data block, and which specific storage device is stored in. Location can be decided by the storage node. In this case, the identification of the storage location may include the identification of the storage node and the identification of the storage device in the storage node. In the case where the granularity of more specific storage locations on the storage devices is employed, the identification of the locations needs to include more specific storage location information in addition to the identification of the storage node and the identification of the storage devices in the storage node. Based on the above correspondence, the location where a certain data stream is stored can be quickly found, achieving fast reading of data. The implementation of this correspondence is not limited to the above-mentioned specific embodiments, as long as the above-mentioned purpose is achieved.

Tables 1 and 2 below show two examples of the above correspondences. Table 1 shows an example where storage locations are storage node granularity, and Table 2 shows an example where storage locations are storage device granularity.

**Table 1**

| Data Stream Identifier | Data Block Identifier | Storage Location |
|---|---|---|
| 1 | 1 | Storage Node 1 |
| 1 | 2 | Storage Node 1 |
| 1 | 3 | Storage Node 2 |
| 2 | 1 | Storage Node 1 |
| 2 | 2 | Storage Node 2 |

As shown in Table 1, the data stream 1 is divided into three data blocks 1, 2, and 3, where the data blocks 1 and 2 are stored in the storage node 1, and the data block 3 is stored in the storage node 2. Therefore, the correspondence may include that the data block identifiers 1, 2, and 3 corresponding to the data stream identifier 1 correspond to the storage nodes 1, 1, and 2 respectively. In addition, the data stream 2 is divided into two data blocks 1 and 2, the data block 1 is stored in storage node 1, and the data block 2 is stored in the storage node 2. Therefore, the correspondence may include that the data block identifiers 1 and 2 corresponding to the data stream identifier 2 correspond to the storage nodes 1 and 2 respectively.

**Table 2**

| Data Stream Identifier | Data Block Identifier | Storage Location |
|---|---|---|
| 1 | 1 | Disk C (1-C) in a Storage Node 1 |
| 1 | 2 | Disk D (1-D) in a Storage Node 1 |
| 1 | 3 | Disk C (2-C) in a Storage Node 2 |
| 2 | 1 | Disk D (1-D) in a Storage Node 1 |
| 2 | 2 | Disk C (2-C) in a Storage Node 2 |

As shown in Table 2, the data stream 1 is divided into three data blocks 1, 2, 3, where the data blocks 1, and 2 are stored in the disks C and D (e.g., which may be identified as 1-C, 1-D, respectively) of the storage node 1, and the data block 3 is stored in the disk C (e.g., which may be identified as 2-C) of the storage node 2. Therefore, the correspondence may include that the data block identifiers 1, 2, and 3 corresponding to the data stream identifier 1 correspond to the storage location identifiers 1-C, 1-D, and 2-C respectively. In addition, the data stream 2 is divided into two data blocks 1, 2, the data block 1 being stored in the disk D (e.g., which may be identified as 3-D) in the storage node 1, and the data block 2 is stored in the disk C (e.g., which may be identified as 4-C) in the storage node 2. Therefore, the correspondence may include that the data block identifiers 1 and 2 corresponding to the data stream identifier 2 correspond to the storage locations 3-D and 4-C respectively.

It should be noted that the above Table 1 and Table 2 are only examples of correspondences, and the present disclosure is not limited thereto, and the correspondences may also take other forms. For example, the data stream identifiers and data block identifiers in the above Tables 1 and 2 can be combined. For example, data block 1 of data stream 1 can be represented as data block 1-1, and data block 2 of data stream 1 can be represented as data block 1-2, data block 3 of data stream 1 can be represented as data block 1-3, data block 1 of data stream 2 can be represented as data block 2-1, and data block 2 of data stream 2 can be represented as data block 2-2.

Optionally, this correspondence in the metadata node and other metadata can be replicated into multiple copies to ensure the reliability of the metadata. When a copy is damaged, the metadata can be provided through other copies. In addition, the metadata node can also allocate one or more copies of each data block to matched storage nodes according to the data redundancy policy. In the case of replica missing, the metadata node can initiate a replication request of the data block to the storage node to satisfy the redundancy policy of the data.

The plurality of compute nodes 210 may be configured to read each data stream from the plurality of storage nodes or store each data stream to the plurality of storage nodes according to the correspondence for each data stream. According to embodiments of the present disclosure, since the correspondence between one or more data blocks into which each data stream is divided and the storage locations where these data blocks are stored is recorded through the metadata node, and the plurality of compute nodes can access correspondences in the metadata node, multiple compute nodes can access these data blocks of data streams in multiple storage nodes according to the correspondences. Therefore, the binding relationship between the compute node and the storage node can be eliminated, and one compute node can access multiple storage nodes as needed, and the same storage node can also be accessed by multiple compute nodes as needed. This can be achieved by the metadata node assigning storage locations to individual data blocks of the data stream.

For storage operations, the metadata node 230 may allocate one or more storage locations for one or more first data blocks into which a data stream is divided based on a request by a compute node that desires to store the data stream, and return information about the allocated storage locations to the compute node. Therefore, the compute node can send the corresponding data block to the corresponding storage node according to the information of each storage location, so as to store the database in the corresponding storage location. It can be seen that the compute node can store the corresponding data block into the corresponding data node according to the storage node allocated by the metadata node, so that the storage is not limited to storage in a fixed storage node. The metadata node can flexibly allocate storage locations based on information about storage nodes in the system and their storage status. It should be noted that the identification information of the above-mentioned storage node is also included in the correspondence between the data block of the data stream and the storage location, so that the compute node can determine the corresponding storage node according to the correspondence.

For read operations, if a compute node expects to read a data stream, the correspondence between the data blocks and storage locations of the data stream can be obtained from the metadata node, to read each data block of the data stream from the corresponding storage location of the corresponding storage node, thereby reading the entire data stream.

Accordingly, the plurality of storage nodes 220 may be configured to store one or more data blocks of each data stream into storage locations for one or more data blocks, respectively. For example, a storage node that receives a request to store a certain data block from a compute node can store the data block to a certain storage address according to the storage location information contained in the request. For example, if the storage location information includes the information of a target storage device, the storage node stores the database in the target storage device, and the specific storage address is determined by the storage node according to its own storage strategy; if the storage location information itself includes a more specific storage address, the storage node stores the database into the storage address contained in the storage location information; if the storage location information only has storage node information without further information, the storage node determines the specific storage device and address based on its own storage policy.

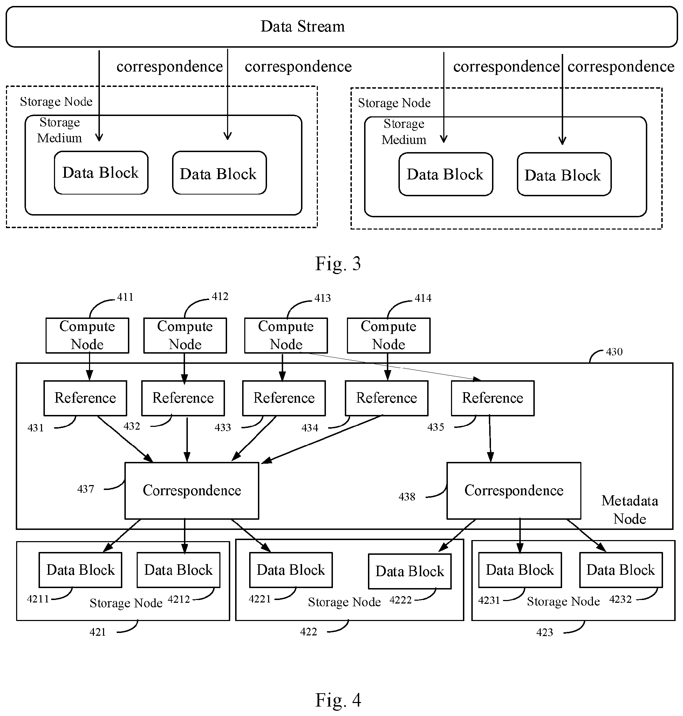

Fig. 3 shows a schematic diagram of storing, by a storage node, a data stream into a data block storage resource in the form of data blocks, according to an embodiment of the present disclosure.

A storage node is a node that stores data, which may include storage media and be responsible for managing storage media. The storage medium can be any form of persistent storage medium, such as magnetic hard drives, solid state drives, etc. The storage node stores the data block into a storage address in the storage medium. Storage nodes can process read and write of data blocks, process delete and copy request of data blocks, and check the integrity of data block to ensure data durability and correctness. Storage nodes can support multiple compute nodes to read data simultaneously, including reading the same piece of data simultaneously.

As shown in Fig. 3, the storage medium in the data node stores the data stream in the form of data blocks. A data stream can be divided into multiple data blocks and stored in multiple storage nodes. There is a correspondence between the data blocks into which the data stream is divided and the storage locations where the data blocks are stored. In this way, a data stream can be stored in different data nodes, achieving dispersion and flexible storage of data streams. Moreover, the same compute node can access multiple storage nodes, the same storage node can also be accessed by multiple compute nodes, eliminating the binding relationship between compute nodes and storage nodes, realizing flexible scheduling between compute nodes and storage nodes.

Returning to Fig. 2, the metadata node 230 may also be configured to record more than two references to the first data stream to be read by more than two compute nodes. Each reference is used by one of the two or more compute nodes to obtain a correspondence for the first data stream, so as to read the first data stream. According to embodiments of the present disclosure, multiple references can be created to a data stream, one for each compute node, so that multiple references can be used for multiple different compute nodes. A reference to a data stream indicates an association to the data stream, for example, it may be an identifier of the data stream that is associated with the data stream. Since the reference can be associated to the data stream, the correspondence between the data blocks of the data stream and the storage locations where the data blocks of the data stream are stored can be obtained based on the reference, and the data stream can then be stored and read. Multiple references to one data stream record may be, for example, multiple identifiers to the data stream record, one identifier for each compute node. The values of these identifiers can be the same or different. When separate references (such as identifiers) are set for different compute nodes for the same data stream, from the perspective of the compute node, it appears that it has enjoyed the data stream alone. Thus, when a compute node needs to read a data stream, only a reference for the compute node is added to the compute node. Conversely, if the compute node no longer needs to read the data stream, the reference for the compute node is simply deleted. As a result, flexible deployment and rapid upgrades of the database can be achieved.

In addition, the metadata node can also manage a life cycle of a data stream and a life cycle during which a certain compute node can access the data stream, by setting different references to different compute nodes. In particular, the metadata node may be configured to: generate a reference to the first data stream for a first compute node of the two or more compute nodes in response to the first compute node needing to read the first data stream; delete the reference to the first data stream for the first compute node in response to the first compute node ceasing to need to read the first data stream; and instruct the plurality of storage nodes to delete the first data stream in response to all references to the first data stream being deleted.

The life cycle of a data stream starts from when the data stream is stored, i.e. when the metadata node creates the first reference, until the data stream is deleted, i.e. until all references to the data stream have been deleted. The lifecycle of each compute node accessing the data stream begins when the compute node needs to access the data stream, i.e., when a reference is created for the compute node, until the compute node no longer needs to access the data stream, i.e., until the reference for the compute node is deleted. By creating individual references for different compute nodes, the metadata node is able to know clearly which compute nodes are likely to access the data stream and can flexibly manage the life cycle of the data stream and the life cycle of each compute node accessing the data stream.

Table 3 below shows an example of the above references, but the present disclosure is not limited thereto.

**Table 3**

| Reference | Compute Node | Data Stream |
|---|---|---|
| Compute Node 1-Data Stream 1 | Compute Node 1 | Data Stream 1 |
| Compute Node 1-Data Stream 2 | Compute Node 1 | Data Stream 2 |
| Compute Node 2-Data Stream 1 | Compute Node 2 | Data Stream 1 |
| Compute Node 2-Data Stream 2 | Compute Node 2 | Data Stream 2 |
| Compute Node 3-Data Stream 3 | Compute Node 3 | Data Stream 3 |
| Compute Node 4-Data Stream 3 | Compute Node 4 | Data Stream 3 |

As shown in Table 3, for example, if the compute nodes 1 and 2 both want to access (read) the data stream 1, a reference to the data stream 1 is established for the compute node 1 (e.g., identified as "Compute Node 1-Data Stream 1"), while a reference to the data stream 1 is established for the compute node 2 (e.g., identified as "Compute Node 2-Data Stream 1"). As such, the compute nodes 1 and 2 can access the data stream 1 simultaneously. If both the compute nodes 1 and 2 want to access the data stream 2, a reference to the data stream 2 is established for the compute node 1 (e.g., identified as "Compute Node 1-Data Stream 2"), while a reference to the data stream 2 is established for the compute node 2 (e.g., identified as "Compute Node 2-Data Stream 2"). As such, the compute nodes 1 and 2 can access the data stream 2 simultaneously. The same is true for the compute nodes 3 and 4, which will not be described again here. Of course, the form of the reference is not limited to the form exemplified in Table 3, and the references only need to indicate which compute node is served and used to read which data stream.

Optionally, the metadata node can also store multiple copies for each reference to meet data redundancy requirements, so that when one copy is damaged, reference information can be obtained from other copies.

Fig. 4 shows an example schematic diagram of a relationship between compute nodes, a metadata node and storage nodes according to an embodiment of the present disclosure.

As shown in Fig. 4, the metadata node 430 records a correspondence 437 between a plurality of data blocks 4211, 4212, and 4221 into which the first data stream is divided and a plurality of storage locations in the storage nodes 421, 422 for storing the plurality of data blocks 4211, 4212, and 4221 of the first data stream, and a correspondence 438 between the second data stream and a plurality of storage locations in the storage nodes 422, 423 for storing the plurality of data blocks 4222, 4231, 4232 into which the second data stream is divided.

For example, the correspondence 437 can be used to store two data blocks 4211 and 4212 of the first data stream in storage node 421 and another data block 4221 in storage node 422. Correspondingly, the correspondence 437 can be used to read three data blocks 4211 and 4212, 4221 from the storage node 421 and the storage node 422 to completely read the first data stream. The correspondence 438 can be used to store two data blocks 4231 and 4232 of the second data stream in storage node 423 and another data block 4222 in storage node 422. Correspondingly, the correspondence 438 can be used to read three data blocks 4231 and 4232, 4222 from the storage node 423 and the storage node 422 to completely read the second data stream.

In the distributed storage service of the prior art, the relationship between a compute node and the storage nodes it can access is fixed, and it is also difficult to store the data stream processed by one compute node into multiple storage nodes. If a storage node is newly added, data needs to be moved to the newly added storage node in order to bind the original compute node to the newly added storage node, which cannot achieve rapid capacity expansion or migration. However, according to embodiments of the present disclosure, compute nodes and storage nodes can achieve flexible allocation of compute nodes and storage nodes through relationships between data blocks and storage locations of data streams established and recorded in a metadata node.

Further, as shown in Fig. 4, the metadata node 430 may also record, as part of the metadata, more than two references to the first data stream to be read by more than two compute nodes. Each reference is used by each of the two or more compute nodes to obtain the correspondence of the first data stream to read the first data stream. The number of references to the first data stream may be the same as the number of compute nodes to access the first data stream, one reference to the first data stream corresponding to one compute node to access the first data stream, and the correspondence is used exclusively for that compute node so that each compute node can access data independently using the reference without interfering with each other.

For example, the metadata node 430 records a plurality of references 431, 432, 433, and 434 for the first data stream, respectively for the compute nodes 411, 412, 413, and 414 to obtain the correspondence 437 for the first data stream in order to access the respective data blocks 4211, 4212, and 4221 of the data stream. The references 431, 432, 433, and 434 point to the same Data stream (the first Data stream), but are for the compute nodes 411, 412, 413, and 414 respectively. Therefore, each compute node 411, 412, 413, and 414 can simultaneously obtain the correspondence 437 of each data block of the first data stream, thereby being able to simultaneously and independently access the data blocks 4211, 4212, and 4221 in the first data stream. That is, one data stream can be accessed by multiple compute nodes simultaneously. From the point of view of the compute nodes, multiple references appear as each compute node having a respective data stream, and thus having a respective database, i.e., a set of one or more data streams. From a database perspective, multiple references appear as a database being replicated in a zero-copy manner as multiple databases, each for different compute nodes. Different compute nodes each have their own references versus sharing the same reference, enabling flexible provisioning and rapid upgrades to the database.

In addition, one compute node may also use multiple references to multiple data streams to access (i.e., read) the multiple data streams. For example, if the compute node 413 wants to access a first data stream and a second data stream, the metadata node 430 creates a reference 433 for the compute node 413 to access the first data stream and creates the reference 435 to access the second data stream.

The specific form of a reference may vary widely. For example, the reference may be an identifier of the data stream, which is associated with the data stream. Further, the reference may additionally include an identifier of the compute node that uses the reference, thereby indicating which compute node uses the reference. Of course, it is also possible to implicitly represent which compute node uses the reference, for example, a reference recorded at a specific location implicitly means specific to a certain compute node, or the value of the reference itself implicitly means specific to a certain compute node. In addition, the reference can also contain a correspondence between the data blocks of the data stream and the storage locations, for example, it may be the correspondence itself, that is, a copy of the correspondence may be recorded for each compute node that wants to access the data stream, which is dedicated to that compute node. An operation with respect to a reference is a pure metadata operation, does not involve copying of data, and can be completed quickly. After a reference to a data stream is established for a compute node, the compute node will see a separate data stream through the reference. When all references to a data stream are released (i.e., deleted), the metadata node will send a deletion request to the storage node where the data block contained in the data stream is located, and delete the metadata of the data stream and the data block, so the life cycle of the data stream and the life cycle for a certain compute node to access the data stream can be managed through references.

According to other embodiments of the present disclosure, a reference can also be used by multiple compute nodes to read the same data stream, in which case, if a compute node no longer uses the reference, the reference will not be deleted but will be retained for continued use by other compute nodes. For example, in an application scenario, if a compute node has a large throughput for the data stream, other compute nodes can be temporarily established to share the throughput of the compute node using the reference of the compute node. When the other compute nodes are not needed to share the throughput, the other compute nodes may be taken offline, but the reference to the data stream is still retained for use by the one compute node.

According to embodiments of the present disclosure, storage locations that can be located in different storage nodes are allocated to the data blocks of each data stream through the metadata node, achieving unbinding and flexible scheduling of compute nodes and storage nodes, and recording the correspondence between each data block of each data stream and the storage location where the data block is stored through the metadata node, so that the stored data streams can be read quickly. In addition, by creating multiple references to a single data stream for different compute nodes, the different compute nodes can access the same data stream independently, thereby enabling flexible deployment and rapid upgrading of the database.

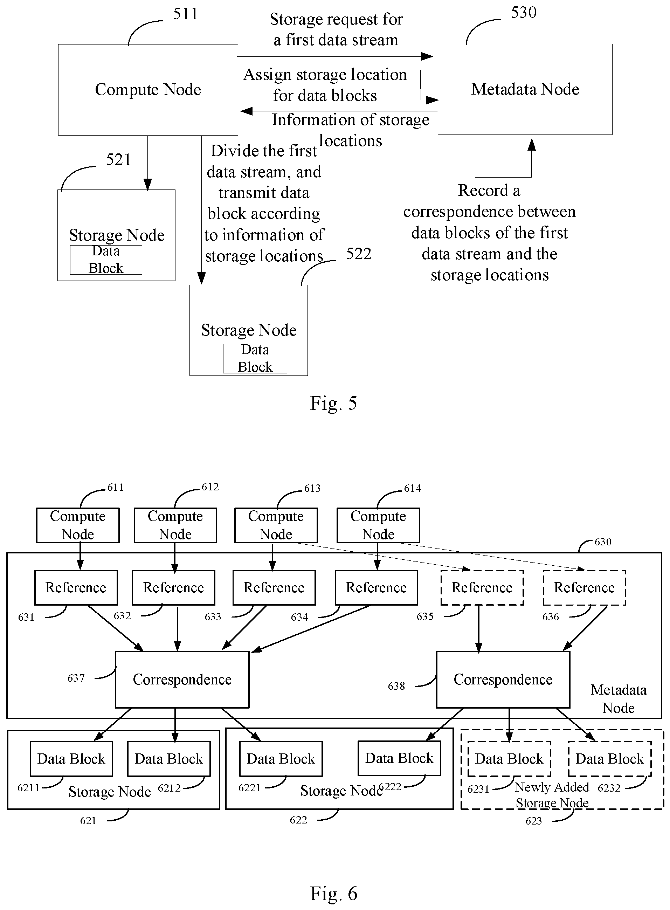

Fig. 5 shows a schematic diagram of a process of writing a data stream according to an embodiment of the present disclosure.

In Fig. 5, as an example for explanation, a second compute node 511 initiates writing (storing) the first data stream. First, the second compute node 511 sends a storage request to the metadata node 530 requesting to store the first data stream.

In response to the storage request that the second compute node 510 desires to store the first data stream, the metadata node 530 assigns, for one or more first data blocks into which the first data stream is divided, one or more first storage locations located in one or more first storage nodes 521, and 522 of the plurality of storage nodes, returns information about the one or more first storage locations for storing the one or more first data blocks to the second compute node 510, and records a correspondence between each first data block of the one or more first data blocks and the first storage location for storing each first data block. For example, the first data stream is divided into two data blocks, and the first data block is allocated for storage in the first storage node 521, so that identification information ID1 of the first storage node 521 can be returned for the first data block; the second data block is allocated for storage in the first storage node 522, so that identification information ID2 of the first storage node 522 can be returned for the second data block. Of course, if the above-mentioned storage location includes a more specific storage location in addition to the storage node, the returned storage location information may also be the more specific storage location information, such as the information of the storage device in the storage node.

The second compute node 510 divides the first data stream into one or more first data blocks (two data blocks in Fig. 5), and sends a corresponding first data block of the one or more first data blocks to the first storage node 521, and 522 corresponding to each first storage location according to the information about the one or more first storage locations. For example, if the storage location of the first data block is located in the first storage node 521, when storing the first data block, the second compute node 510 sends it to the first storage node 521 according to the identification information ID1 of the first storage node 521. The storage location corresponding to the second data block is located in the first storage node 522. When storing the second data block, the second compute node 510 sends it to the first storage node 522 according to the identification information ID2 of the first storage node 522.

In one embodiment, before the second compute node 510 sends the corresponding data block to the corresponding first storage nodes 521 and 522, the corresponding data block may be written to the memory until the data in the memory reaches a predetermined amount of data, and the second compute node 510 then asynchronously writes the data block cached in the memory to the first storage node.

Finally, the first storage nodes 521, and 522 store the first data blocks received from the second compute node 510 into corresponding first storage locations.

Specific implementations and technical effects according to embodiments of the present disclosure in different scenarios are introduced below.

### Scenario 1-Storage Node Fast Expansion

Over time, the amount of data stored in a database may grow rapidly. If there is insufficient storage space, the database will not be able to accommodate new data, causing the system to crash or fail to function properly. At the same time, database performance suffers when the database storage space approaches full. Read and write operations may be slow and query-response durations increase, resulting in a degraded user experience. It can be seen that rapid expansion of storage space is very important to ensure system normal operation, improve performance and protect data security.

Accordingly, in the case of adding storage nodes to expand storage space, the metadata node may be configured to: record information of the newly added storage node and, in response to a request by a third compute node of the plurality of compute nodes requesting to store a data stream, and allocate storage locations including a storage location located in the newly added storage node to the third compute node. In one embodiment, the information of the newly added storage node may be provided to the metadata node by the control node, that is, the control node may be configured to send the information of the newly added storage node to the metadata node according to the newly added storage node. In another embodiment, the newly added storage node can also send its own information to the metadata node itself.

Fig. 6 shows a schematic diagram of how to quickly read and write data after newly adding a storage node according to an embodiment of the present disclosure.

Assuming that a storage node 623 is newly added, compared to the conventional way to move a portion of the data in the existing storage nodes 621, and 622 to the newly added storage node 623, according to embodiments of the present disclosure, the data may not be moved, but in response to a request by a certain compute node 613 of the plurality of compute nodes 611, 612, 613, and 614 requesting to store a data stream, the metadata node 630 allocates a storage location including a storage location located in the newly added storage node 623 to the compute node 613 in order to store the data blocks 6231, 6232, and 6222 of the data stream. As shown in Fig. 6, the data blocks 6231, and 6232 are located in the newly added storage node 623, while the data block 6222 is located in the old storage node 622. Of course, all data blocks can also be stored in the newly added storage node 623. The metadata node 630 records a correspondence 638 between each data block of the data stream and a storage location where each data block of the data stream is stored.

In addition, the metadata node 630 may also record a plurality of references 635, and 636 for the data stream, which are used by the compute nodes 613, and 614, respectively, to obtain a correspondence 638 for the data stream to access the data stream.

In this way, according to the previously explained storage and read operations of the data stream, the storage operation of the data stream can be immediately performed in the newly added storage node, and the read operation can be performed subsequently. Compared with the problem that the existing database architecture cannot immediately provide corresponding write services when the storage nodes expand, according to embodiments of the present disclosure, what is exposed to the compute node in the storage layer is an abstraction at the data block level, a data block can be assigned to any storage location in any storage node for storage, so when a new storage node is added, this data block-level write service can be provided immediately.

### Scenario 2-Zero-Copy Dynamic Load Balancing

As data continues to be written, the distribution of data streams contained in some databases (such as tables) among compute nodes will change, and the frequency of requests for different data will also change, so that some compute nodes may need to process more data, resulting in performance bottlenecks. Embodiments according to the present disclosure can perform a dynamic load balancing mechanism without copying data blocks, avoiding performance bottlenecks due to data distribution.

Specifically, the control node is configured to: schedule a second data stream processed by a fourth compute node of the plurality of compute nodes to be processed by a fifth compute node of the plurality of compute nodes according to a load distribution of the plurality of compute nodes, control the metadata node to establish a reference to the second data stream for the fifth compute node during the scheduling, and delete the reference to the second data stream for the fourth compute node after the scheduling is completed.

For example, the control node can obtain the amount of data and the load it brings recorded in real time by each compute node, to which data this compute node has a reference, thereby learning the load distribution of multiple compute nodes. If the control node finds that such a load distribution is not optimal, or there is a situation where the load distribution is not balanced, e.g. the load at some compute nodes is significantly higher than the load at other compute nodes, it is necessary to schedule the partial data streams (e.g. the second data stream) on those compute nodes (e.g. the fourth compute node) with a high load to other compute nodes (e.g. the fifth compute node) for processing.

After the reference to the second data stream is established for the fifth compute node, and after the scheduling is completed, the fifth compute node can take over the second data stream without copying or moving the second data stream, and the reference to the second data stream for the fourth compute node can be deleted. In this way, relying on the efficient data stream reference mechanism provided by the metadata node, on the basis of zero-copy data stream, the data stream can be quickly taken over by other compute nodes, thereby eliminating the performance bottleneck of the system.

In addition, during the scheduling process, since the original reference of the fourth compute node to the second data stream is still valid, the fourth compute node can still access the second data stream. Therefore, the scheduling process will not affect the fourth compute node's processing of read requests for the second data stream. After the scheduling is completed, the user's read request for the second data stream will be automatically routed to the new fifth compute node, and the old reference of the fourth compute node will be deleted. At this time, the fifth compute node completely takes over the second data stream.

### Scenario 3-Compute Node Group Flexibly Realizing Resource Sharing and Exclusively Owning of Database

Database resource sharing can reduce hardware and software costs, resource exclusively owning can ensure the stability of service, and provide higher security. According to embodiments of the present disclosure, two databases (sets of data streams) can be assigned to the same set of compute nodes, letting them share the same set of computing resources (i.e., resource sharing), e.g., references to two databases can be read by the same compute node; it is also possible to assign the two databases to two different sets of compute nodes, physically guaranteeing their isolation (i.e., resource exclusively owning). Here, a data entry in a database can be streamed into a data stream, and therefore, a database can be represented as a set of data streams, and a set of data streams may include one or more data streams.

Embodiments according to the present disclosure can migrate a database from one set of compute nodes to another set of compute nodes with zero-copy data blocks, thus enabling rapid switching between database shared resources and exclusively owned resources.

In particular, the control node may be configured to control the metadata node to copy a reference to a data stream of the first set of data streams for each compute node of the first compute node group processing the first set of data streams, to create a reference to a data stream of the first set of data streams for each compute node of the original second compute node group; and control the first set of data streams to be taken offline from the first compute node group. The metadata node may be configured to delete a reference to a data stream of the first set of data streams for each compute node of the first compute node group. As such, the first set of data streams may be migrated from the first compute node group to the second compute node group with zero copy data blocks, and the second compute node group accesses the first set of data streams and provides service to the outside.

### Scenario 4-Database Fast Zero-Copy Multiple Copies Architecture

When the database still cannot meet user requests through horizontal expansion, vertical expansion is required. Traditional databases require a physical copy of the data to expand. This method not only wastes storage space, but is also relatively slow. According to embodiments of the present disclosure, the service capacity of the database can be increased by multiple compute nodes referencing the same piece of data and providing services. In other words, according to embodiments of the present disclosure, the purpose of increasing the service capacity of processing databases can be achieved by adding compute nodes without copying data streams.

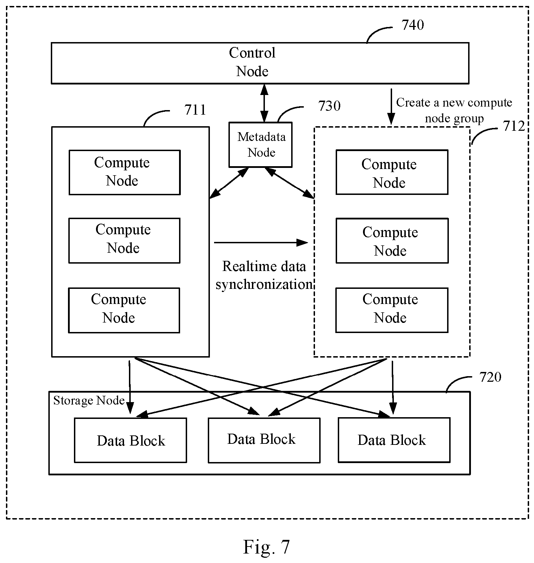

Fig. 7 shows a schematic diagram of a database fast zero-copy multiple copies architecture according to an embodiment of the present disclosure.

As shown in Fig. 7, first, the control node 740 may request cloud resources to select or construct a new compute node group 712, such as the newly added second compute node group in the previous embodiment. Specifically, the control node 740 may be configured to control the metadata node 730 to copy a reference to a data stream of the first set of data streams for each compute node of the first compute node group 711 processing the first set of data streams (the first database), to create a reference to a data stream of the first set of data streams for each compute node of the newly added second compute node group 712.

At the same time, in order to enable the newly added second compute node group 712 to obtain the complete information of the first compute node group 711, the control node is further configured to control each compute node in the first compute node group 711 to synchronize the data in the memory into the memory of the compute node in the second compute node group 712.

For example, the memory of the first compute node group 711 may be loaded with data to be stored in the storage node. In order to completely synchronize the current process of the first compute node group 711, the second compute node group 712 can obtain data in the memory of the first compute node group 711 and store it in its own memory to perform database operations based on the data in the memory. After the memory of the second compute node group 712 obtains the data in the memory of the first compute node group 711, the data can be directly read from its own memory, thereby improving the data reading speed. For example, the synchronization method may be that the control node 740 controls the second compute node group 712 to obtain the current memory data from each compute node of the first compute node group 711 by sending a network request, and synchronously load it into the memory of the second compute node group 712.

In this way, since the metadata node 730 records the reference to the first set of data streams by the first compute node group 711 and the reference to the first set of data streams by the second compute node group 712 at the same time, and the real-time data in memory is also synchronized, both the first compute node group 711 and the second compute node group 712 can process the first set of data streams, realizing a fast zero-copy multiple copy of the database.

### Scenario 5-Zero-Copy Fast Cloning of a Readable-Writable Database

During the use of the database, users want to be able to quickly perform multiple different experiments on a single data without interfering with each other. According to embodiments of the present disclosure, a readable and writable database can be quickly cloned with zero data copies, and provided to different business parties for simultaneous experiments. Users can continue to initiate new read and write requests on the new cloned database. Users can also continue to clone new databases. This usage experience greatly improves the efficiency of business iterations while reducing usage costs.

According to embodiments of the present disclosure, in order to achieve zero-copy fast cloning of a read-writable database, it is only necessary to copy a new reference to all data streams in the database, and the new reference appears as a new data block from the perspective of the compute node. When the new data block needs to be loaded into a compute node, it only needs to assign the corresponding reference to the compute node.

### Scenario 6-Smooth Upgrade Based on Fast Database Clone

Smooth database upgrade can not only ensure the normal operation of the system, reduce the risk of downtime and data loss, and improve system usability and user experience, but also bring performance and functionality improvement. However, in the existing technology, the status of each node requires system upgrading of collaborative services, and there is no particularly good solution that both ensures high service level agreements (SLA) and reduces data storage and management costs.

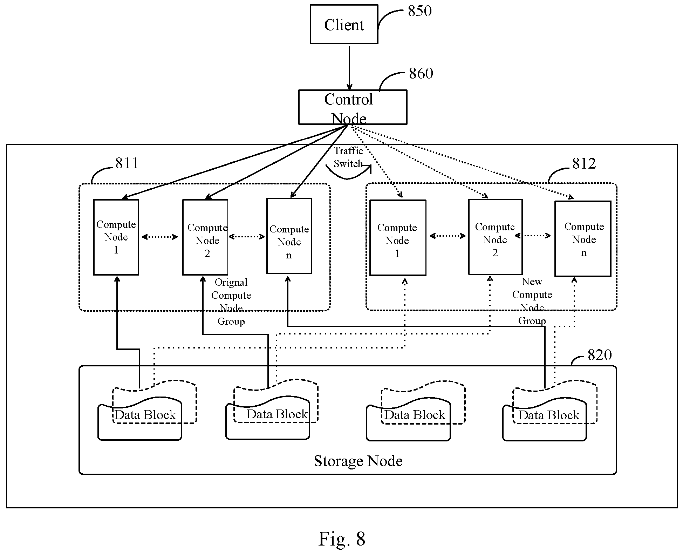

Fig. 8 shows a schematic diagram of a process of smooth upgrade based on fast database cloning according to an embodiment of the present disclosure.

As shown in Fig. 8, a control node 860 may receive instructions from a client 850 to determine to upgrade from a first compute node group 811 to a second compute node group 812. The second compute node group 812 may be a group of compute nodes that the control node 860 newly requests from cloud services.

Similar to Scenario 4, the control node 860 may be configured to control the metadata node to copy a reference to a data stream of the first set of data streams for each compute node of the first compute node group 811 processing the first set of data streams, to create a reference to a data stream of the first set of data streams for each compute node of the newly added second compute node group 812; and each compute node in the first compute node group 811 is controlled to synchronize data in its memory into a memory of a compute node in the second compute node group 812.

In order to improve user experience and smooth database upgrade, the control node 860 may be further configured to control the first compute node group 811 to stop writing data into its memory when an amount difference between the data in the memory of the first compute node group 811 and the data in the memory of the second compute node group 812 is less than a first predetermined threshold or a synchronization latency between the first compute node group and the second compute node group is lower than a second predetermined threshold, control the second compute node group 812 to go online and control the first compute node group 811 to go offline after synchronization is completed, and control the metadata node to delete a reference to a data stream of the first set of data streams for each compute node of the first compute node group 811 after synchronization is completed. In the embodiment of the present disclosure, the online presence of a compute node indicates that the compute node can perform read and write operations on the corresponding database.

The first predetermined threshold or the second predetermined threshold determines the time of non-writable operations. The larger the threshold, the larger the amount of data that needs to be synchronized after stopping writing, and the longer the synchronization time; the smaller the threshold, the smaller the amount of data that needs to be synchronized after stopping writing, and the shorter the synchronization time. After synchronization is completed, the second compute node group goes online, and subsequent data can be written through the second compute node group, for example, firstly written into the memory of the second node group and then stored in the storage node, or directly stored in the storage node. Therefore, from the user's perspective, the write operation cannot be performed only until the first compute node group stops writing and the second compute node group completes synchronization online. Therefore, by setting an appropriate threshold, the user can only be unable to perform writing operations for a short period of time, so that the user may not even perceive the stopping process, improving the user experience.

For example, when the amount difference between the data in the memory of the first compute node group 811 and the data in the memory of the second compute node group 812 is small, since the amount of data that differs in the memories of the two compute node groups is small, then the write process is stopped at this time, so that the first compute node group can quickly synchronize the data with a small difference in the memory to the memory of the second compute node group. Thus, the second compute node group quickly comes online after synchronization is completed, and then performs subsequent data write operations. By setting an appropriate first threshold so that the process time is short, the user may not even perceive the process of stopping writing, resulting in a better usage experience for the user.

For another example, if the synchronization delay between the first compute node group 811 and the second compute node group 812 is low, the amount difference between the data in the memory of the first compute node group 811 and the data in the memory of the second compute node group 812 is small because they can be synchronized quickly. At this time, it is suitable to stop the write operation of the first compute node group 811. Moreover, since the synchronization delay is small, the difference data in memory can be further synchronized faster, so that the subsequent further synchronization time is shorter. Therefore, at this time, it is appropriate to stop the write operation of the first compute node group 811 and complete the synchronization of the first compute node group 811 and the second compute node group 812, so as to bring a better usage experience to the user.

The above-mentioned first threshold and second threshold can be set empirically or experimentally based on system requirements. For example, the data mount difference or the synchronization delay between the two compute node groups is determined, as the first threshold or the second threshold, with reference to historical experience values based on the maximum length of time expected to stop writing operations (for example, 1 second).

Furthermore, the amount difference between the data in the memory of the first compute node group and the data in the memory of the second compute node group, or the synchronization latency between the first compute node group and the second compute node group, may be determined by various technical means. For example, each compute node of the compute node group can monitor data written to memory and report the corresponding data to a summary node (such as a control node or a compute node), so that the summary node can determine the data amount differences in the memories of respective compute nodes. For another example, the synchronization delay may be determined by the difference between the time when a certain compute node of the first compute node group sends data and the time when a certain compute node of the second compute node group receives the data. In embodiments of the present disclosure, the synchronization delay represents the time difference from the sending of data by one node to the complete reception of the data by another node, including decoding and processing time when the data is received.

It should be noted that in the embodiments of the present disclosure, the components and operations of the "compute node group" represent the components and operations of the compute nodes in the compute node group. For example, the memory of the "first/second compute node group" represents the memory of the compute nodes in the "first/second compute node group", which may be the memory of all compute nodes or the memory of a representative compute node. For another example, the synchronization delay between the first compute node group and the second compute node group can be the average of the synchronization delays between all corresponding compute nodes in the two compute node groups, or the synchronization delay between a representative one or more compute nodes in the two compute node groups.

Through the above process, the database service is smoothly upgraded from the first compute node group 811 to the second compute node group without actually copying the first set of data streams (data blocks). During the above-mentioned entire upgrade process, users can always be provided with database reading services, and the writing process only has a short stop, on the order of seconds. Therefore, users can hardly feel stuck, which brings a good experience to users.

### Scenario 7-Fast Backup and Restore of Databases

Database backup is an important method to protect data security, provide data recovery and disaster recovery capabilities, and is crucial to ensure business continuity and data reliability.

Traditional database backup requires copying data physically, which wastes storage space.

Embodiments according to the present disclosure do not need to actually copy the data, but only need to add a reference to the data to perform backup, which greatly saves storage space. During the recovery process of the database, through the same reference technology, the backup can be quickly loaded into the compute node group by associating the compute node with the reference, thereby greatly accelerating the database recovery process.

According to an embodiment of the present disclosure, there is also provided a metadata node for a distributed database architecture system, the distributed database architecture system comprising a plurality of compute nodes, a plurality of storage nodes, and a metadata node, wherein the metadata node is configured to: record a correspondence between each data stream and one or more data block storage resources storing each data stream, the one or more data block storage resources being located in one or more of the plurality of storage nodes, and each of the one or more data block storage resources storing one of the one or more data blocks into which each data stream is divided; and record two or more references to the first data stream to be read by the two or more compute nodes, each reference being used by one of the two or more compute nodes to obtain a correspondence for the first data stream, so as to read the first data stream.

The descriptions involving the metadata node in the above description of the distributed database architecture system are also applicable here and will not be described again.

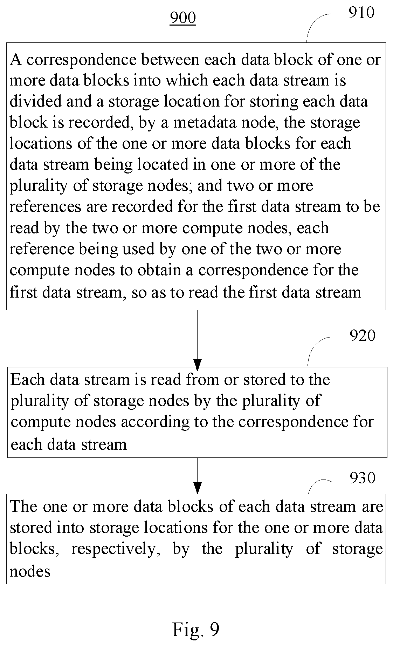

Fig. 9 shows a flowchart of a method 900 for a distributed database architecture system according to an embodiment of the present disclosure. The distributed database architecture system includes a plurality of compute nodes, a plurality of storage nodes, and a metadata node. As shown in Fig. 9, method 900 includes steps 910-930.

In a step 910, a correspondence between each data block of one or more data blocks into which each data stream is divided and a storage location for storing each data block is recorded, by a metadata node, the storage locations of the one or more data blocks for each data stream being located in one or more of the plurality of storage nodes; and two or more references are recorded for the first data stream to be read by the two or more compute nodes, each reference being used by one of the two or more compute nodes to obtain a correspondence for the first data stream, so as to read the first data stream.

In step 920, each data stream is read from or stored to the plurality of storage nodes by the plurality of compute nodes according to the correspondence for each data stream.

In step 930, the one or more data blocks of each data stream are stored into storage locations for the one or more data blocks, respectively, by the plurality of storage nodes.

In some embodiments, the method 900 further comprises: generating, by the metadata node, a reference to the first data stream for a first compute node of the two or more compute nodes in response to the first compute node needing to read the first data stream; deleting the reference to the first data stream for the first compute node in response to the first compute node ceasing to need to read the first data stream; and instructing the plurality of storage nodes to delete the first data stream in response to all references to the first data stream being deleted.

In some embodiments, the method 900 further comprises: assigning, by the metadata node in response to a storage request by a second compute node of the plurality of compute nodes requesting to store the first data stream, one or more first storage locations located in the one or more first storage nodes of the plurality of storage nodes for the one or more first data blocks into which the first data stream is divided, returning, to the second compute node, information about the one or more first storage locations for storing the one or more first data blocks, and recording a correspondence between each of the one or more first data blocks and the first storage location for storing the each first data block; dividing, by the second compute node, the first data stream into one or more first data blocks, and sending a corresponding first data block of the one or more first data blocks to the first storage node corresponding to each first storage location according to the information about the one or more first storage locations; and storing, by the first storage node, the first data blocks received from the second compute node into the corresponding first storage locations.

In some embodiments, the method 900 further includes recording, by the metadata node, information of the newly added storage node, and in response to a request by a third compute node of the plurality of compute nodes requesting to store the data stream, allocating storage locations including a storage location located in the newly added storage node to the third compute node.

In some embodiments, the distributed database architecture system further includes a control node, and the method 900 further includes: sending, by the control node, information of the newly added storage node to the metadata node according to the newly added storage node.

In some embodiments, the distributed database architecture system further comprises a control node, and the method 900 further comprises: by the control node: scheduling a second data stream processed by a fourth compute node of the plurality of compute nodes to be processed by a fifth compute node of the plurality of compute nodes according to a load distribution of the plurality of compute nodes, controlling the metadata node to establish a reference to the second data stream for the fifth compute node during the scheduling, and deleting the reference to the second data stream for the fourth compute node after the scheduling is completed.

In some embodiments, the distributed database architecture system further comprises a control node, and the method 900 further comprises: controlling, by the control node, the metadata node to copy a reference to a data stream of the first set of data streams for each compute node of a first compute node group for processing the first set of data streams, to create a reference to a data stream of the first set of data streams for each compute node of a newly added or original second compute node group.

In some embodiments, the method 900 further comprises: controlling, by the control node, the first set of data streams offline from the first compute node group; and deleting, by the metadata node, a reference to a data stream of the first set of data streams for each compute node of the first compute node group.

In some embodiments, the method 900 further includes controlling, by the control node, each compute node in the first compute node group to synchronize data in memory into memory of a compute node in the second compute node group.

In some embodiments, the method 900 further comprises, by the control point: controlling the first compute node group to stop writing data into its memory when an amount difference between data in memory of the first compute node group and data in memory of the second compute node group is less than a first predetermined threshold or a synchronization latency between the first compute node group and the second compute node group is below a second predetermined threshold, controlling the second compute node group to go online and the first compute node group to go offline after the synchronization is completed, and controlling the metadata node to delete a reference to a data stream of the first set of data streams for each compute node of the first compute node group after the synchronization is completed.

In some embodiments, the method 900 further comprises storing, by the metadata node, a plurality of replicas for each reference.

In some embodiments, the plurality of compute nodes are deployed in one or more cloud services; and/or the plurality of storage nodes are deployed in one or more cloud services.

The above description of the distributed database architecture system also applies to the method for the distributed database architecture system.

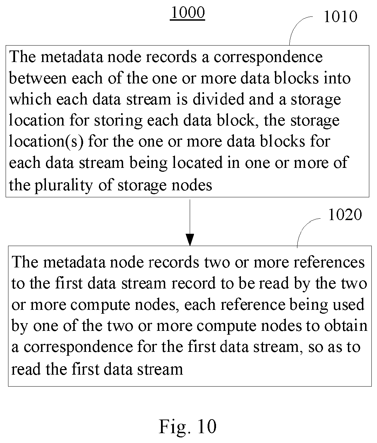

Fig. 10 illustrates a flowchart of a method 1000 for a metadata node of a distributed database architecture system. The distributed database architecture system includes a plurality of compute nodes, a plurality of storage nodes, and a metadata node. As shown in Fig. 10, method 1000 includes steps 1010-1020.

In step 1010, the metadata node records a correspondence between each of the one or more data blocks into which each data stream is divided and a storage location for storing each data block, the storage location(s) for the one or more data blocks for each data stream being located in one or more of the plurality of storage nodes.

In step 1020, the metadata node records two or more references to the first data stream record to be read by the two or more compute nodes, each reference being used by one of the two or more compute nodes to obtain a correspondence for the first data stream, so as to read the first data stream.

The above description regarding the distributed database schema system, the metadata node, and methods for the distributed database schema system also apply to the methods for the the metadata node.

In summary, according to various embodiments of the present disclosure, unbinding and flexible scheduling of compute nodes and storage nodes are realized, stored data streams are quickly read, and different compute nodes can independently access the same data stream, thereby enabling database flexible deployment and rapid upgrade. According to various embodiments of the present disclosure, it is also possible to solve fast expansion of storage nodes, dynamic load balancing of compute nodes without copying data, resource sharing and exclusively owning of databases, fast zero-copy multiple copies of database granularity, fast zero-copy multiple copies of database granularity, cloning a readable and writable database without copying data, fast smooth upgrade of database cloning, fast backup and recovery of database granularity, etc.

It should be noted that the above-mentioned specific embodiments are only examples and not limitations, and those skilled in the art can merge and combine some steps and devices from the above-mentioned separately described embodiments according to the concept of the present disclosure to achieve the effects of the present disclosure., embodiments formed by such merges and combinations are also included in the present disclosure, and such merges and combinations are not described here one by one. In addition, the "first", "second", "third" and "fourth" in this disclosure are only used to mark a certain element or elements, and do not indicate their importance or particularity, nor do they indicate their difference. For example, the first compute node and the second compute node can be different compute nodes or the same compute node.

The advantages, advantages, effects, etc. mentioned in the present disclosure are only examples and not limitations, and these advantages, advantages, effects, etc. cannot be considered to be necessary for each embodiment of the present disclosure. In addition, the specific details disclosed above are for the purpose of example and understanding only, and are not limiting, and the above details do not limit the present disclosure to the specific details must be used to practice the present disclosure.

The block diagrams of the devices, devices, equipment, and systems involved in this disclosure are only illustrative examples and are not intended to require or imply that they must be connected, arranged, or configured in the manner shown in the block diagrams. As will be appreciated by those skilled in the art, these devices, apparatuses, devices, systems may be connected, arranged, configured in any way.

The step flow diagrams and the above method descriptions in this disclosure are merely illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods.

The various operations of methods described above may be performed by any suitable means capable of performing the corresponding functions. The means may include various hardware and/or software component (s) and/or module (s), including, but not limited to, a hardware circuit, an application specific integrated circuit (ASIC), or a processor.

The present disclosure may also include a computer program product, wherein the computer program product may perform the methods, steps, and operations presented herein. For example, such a computer program product may be a computer software package, computer code instructions, a computer readable tangible medium having computer instructions tangibly stored (and/or encoded) thereon, the instructions being executable by a processor to perform the operations described herein.

## Claims

1. A distributed database architecture system, comprising a plurality of compute nodes, a plurality of storage nodes, and a metadata node, wherein
the metadata node is configured to:
record a correspondence between each data block of one or more data blocks into which each data stream is divided and a storage location for storing the each data block, the storage location(s) for the one or more data blocks for each data stream being located in one or more of the plurality of storage nodes, and
record two or more references to a first data stream to be read by two or more compute nodes, each reference being used by one of the two or more compute nodes to obtain the correspondence for the first data stream, so as to read the first data stream; and
the plurality of compute nodes are configured to:
read each data stream from the plurality of storage nodes or store the each data stream to the plurality of storage nodes in accordance with the correspondence for the each data stream; and
the plurality of storage nodes are configured to:
store the one or more data blocks of each data stream into storage locations for the one or more data blocks, respectively.

2. The distributed database architecture system of claim 1, wherein the metadata node is further configured to:
generate a reference to the first data stream for a first compute node of the two or more compute nodes in response to the first compute node needing to read the first data stream;
delete the reference to the first data stream for the first compute node in response to the first compute node ceasing to need to read the first data stream; and
instruct the plurality of storage nodes to delete the first data stream in response to all references to the first data stream being deleted.

3. The distributed database architecture system of claim 1, wherein
the metadata node is further configured to:
assign one or more first storage locations located in one or more first storage nodes of the plurality of storage nodes for one or more first data blocks into which the first data stream is divided, in response to a storage request by a second compute node of the plurality of compute nodes requesting to store the first data stream,
return information about the one or more first storage locations for storing the one or more first data blocks to the second compute node, and
record a correspondence between each first data block of the one or more first data blocks and the first storage location for storing the each first data block; and
the second compute node is configured to:
divide the first data stream into the one or more first data blocks, and
send a corresponding first data block of the one or more first data blocks to the first storage node corresponding to each first storage location according to the information about the one or more first storage locations; and
the first storage node is configured to:
store the first data blocks received from the second compute node into corresponding first storage locations.

4. The distributed database architecture system of claim 1, wherein
the metadata node is further configured to record information of a newly added storage node, and in response to a request by a third compute node of the plurality of compute nodes requesting to store a data stream, allocate storage locations including a storage location located in the newly added storage node to the third compute node.

5. The distributed database architecture system of claim 4, further comprising a control node, wherein
the control node is configured to send information of the newly added storage node to the metadata node according to the newly added storage node.

6. The distributed database architecture system of claim 1, further comprising a control node, wherein,
the control node being configured to:
schedule a second data stream processed by a fourth compute node of the plurality of compute nodes to be processed by a fifth compute node of the plurality of compute nodes according to a load distribution of the plurality of compute nodes, and
control the metadata node to establish a reference to the second data stream for the fifth compute node during the scheduling and to delete a reference to the second data stream for the fourth compute node upon completion of the scheduling.

7. The distributed database architecture system of claim 1, further comprising a control node, wherein
the control node is configured to:
control the metadata node to copy references to data streams of a first set of data streams for each compute node of a first compute node group for processing the first set of data streams to create references to data streams of the first set of data streams for each compute node of a new or present third compute node group.

8. The distributed database architecture system of claim 7, wherein
the control node is further configured to control the first set of data streams to be taken offline from the first compute node group; and
the metadata node is further configured to delete a reference to a data stream of the first set of data streams for each compute node of the first compute node group.

9. The distributed database architecture system of claim 7, wherein
the control node is further configured to control each compute node in the first compute node group to synchronize data in a memory into a memory of a compute node of a second compute node group.

10. The distributed database architecture system of claim 9, wherein
the controlling node is further configured to:
control the first compute node group to stop writing data into its memory when an amount difference between the data in the memory of the first compute node group and the data in the memory of the second compute node group is less than a first predetermined threshold or a synchronization latency between the first compute node group and the second compute node group is below a second predetermined threshold,
control the second compute node group to come online and control the first compute node group to go offline after the synchronization is completed, and
control the metadata node to delete a reference to a data stream of the first set of data streams for each compute node of the first compute node group after the synchronization is completed.

11. The distributed database architecture system of claim 1, wherein
the metadata node is further configured to store multiple copies for each reference.

12. The distributed database architecture system of claim 1, wherein
the plurality of compute nodes are deployed in one or more cloud services; and/or
the plurality of storage nodes are deployed in one or more cloud services.

13. A metadata node for a distributed database architecture system comprising a plurality of compute nodes, a plurality of storage nodes, and a metadata node, wherein the metadata node is configured to:
record a correspondence between each data block of one or more data blocks into which each data stream is divided and a storage location for storing the each data block, the storage location(s) for the one or more data blocks for each data stream being located in one or more of the plurality of storage nodes; and
record two or more references to a first data stream to be read by two or more compute nodes, each reference being used by one of the two or more compute nodes to obtain the correspondence for the first data stream, so as to read the first data stream.

14. A method for a distributed database architecture system comprising a plurality of compute nodes, a plurality of storage nodes, and a metadata node, wherein the method comprises:
by the metadata node:
recording a correspondence between each data block of one or more data blocks into which each data stream is divided and a storage location for storing the each data block, the storage location(s) for the one or more data blocks for each data stream being located in one or more of the plurality of storage nodes, and
recording two or more references to a first data stream to be read by two or more compute nodes, each reference being used by one of the two or more compute nodes to obtain the correspondence for the first data stream, so as to read the first data stream;
by the plurality of compute nodes:
reading each data stream from the plurality of storage nodes or store the each data stream to the plurality of storage nodes in accordance with the correspondence for the each data stream; and
by the plurality of storage nodes:
storing the one or more data blocks of each data stream into storage locations for the one or more data blocks, respectively.

15. A method for a metadata node of a distributed database architecture system comprising a plurality of compute nodes, a plurality of storage nodes, and a metadata node, wherein the method comprises:
recording a correspondence between each data block of one or more data blocks into which each data stream is divided and a storage location for storing the each data block, the storage location(s) for the one or more data blocks for each data stream being located in one or more of the plurality of storage nodes; and
recording two or more references to a first data stream to be read by two or more compute nodes, each reference being used by one of the two or more compute nodes to obtain the correspondence for the first data stream, so as to read the first data stream.
